# EUROPÄISCHE PATENTANMELDUNG

(11) **EP 4 279 751 A1**
(43) Veröffentlichungstag der Anmeldung: **22.11.2023**
(21) Anmeldenummer: 23168664.3
(22) Anmeldetag: 19.04.2023
(51) Int. Cl.: F16B 2/06, F16B 2/10, F16B 5/06

(54) **HALTEVORRICHTUNG ZUM HALTEN EINER SENSOREINRICHTUNG**

(30) Priorität: 12.05.2022 DE 102022001672
(71) Anmelder: Baumer Optronic GmbH, 01454 Radeberg (DE)
(72) Erfinder: Steinicke, Michael, 01307 Dresden (DE); Schmidt, Nikolaus, 71067 Sindelfingen (DE)
(74) Vertreter: Strauss, Steffen

(57) **Zusammenfassung**

Die Erfindung betrifft eine Haltevorrichtung (100) zum Befestigen eines Sensors an einer Befestigungsstange (150). Die Haltevorrichtung umfasst einen Trägerkörper (110) zum Anbringen des Sensors, wobei der Trägerkörper eine Trägerplatte (110a) mit einer zentralen Bohrung (113a) aufweist, welche eine Innenseite (113b) der Trägerplatte ausbildet. Ferner umfasst die Haltevorrichtung ein Paar von Klemmbacken (120a,b)), wobei jede Klemmbacke eine Innenseite (122a,b) aufweist, welche ausgebildet ist, die Befestigungsstange (150) in Eingriff zu nehmen, sowie einen vorderen Endabschnitt (127a,b) und einen hinteren Endabschnitt, wobei der vordere Endabschnitt (127a,b) jeweils einen Nutenabschnitt (125a,b) ausbildet, der in die zentrale Bohrung (113a) der Trägerplatte (110a) eingehängt ist. Die Haltevorrichtung umfasst ferner eine Schraubverbindung, welche in Befestigungsbohrungen (121a,b) der hinteren Endabschnitte der Klemmbacken (120a,b) aufgenommen ist, angezogen zu werden, um die hinteren Endabschnitte der Klemmbacken derart aufeinander zu zu bewegen, dass die Innenseiten der Klemmbacken gegen die Befestigungsstange gepresst werden, und um die vorderen Endabschnitte der Klemmbacken derart voneinander weg zu bewegen, dass die Innenseite der Trägerplatte abschnittsweise in den jeweiligen Nutenabschnitt eingreift. Ferner betrifft die Erfindung eine Sensoreinrichtung mit einem Sensor und einer solchen Haltevorrichtung.

## Beschreibung

Die Erfindung betrifft eine Haltevorrichtung zum Halten bzw. Befestigen einer Sensoreinrichtung, insbesondere einer optischen Sensoreinrichtung, beispielsweise eines Code-Readers, einer Kamera oder dergleichen, in einer gewünschten Position und Orientierung sowie eine Sensorvorrichtung mit einer solchen Haltevorrichtung.

Sensoren werden häufig zur Überwachung industrieller Fertigungsprozesse eingesetzt. Hierzu müssen die Sensoren, insbesondere im Fall von optischen Sensoren, wie Code-Readern, Kameras oder dergleichen, in der Regel in einer definierten Position und mit einer definierten Orientierung beispielsweise relativ zu einer Fertigungsmaschine einer Fertigungsstraße gehalten werden. Beispielsweise aus der DE 196 25 580 C2 ist eine Haltevorrichtung zum Befestigen eines Sensors an einer Befestigungsstange einer Fertigungsmaschine bekannt.

In der industriellen Praxis kommen jedoch häufig Fertigungsmaschinen zum Einsatz, die Befestigungsstangen mit unterschiedlichen Durchmessern aufweisen, beispielsweise Durchmessern von 12 mm, 14 mm und 16 mm. Bekannte Haltevorrichtungen, wie beispielsweise die in der DE 196 25 580 C2 beschriebene Haltevorrichtung, erlauben eine stabile Befestigung der Sensoreinrichtung nur an einer Befestigungsstange mit einem definierten Durchmesser und somit keine stabile Befestigung der Sensoreinrichtung an Befestigungsstangen mit unterschiedlichen Durchmessern.

Daher liegt der vorliegenden Erfindung die Aufgabe zu Grunde, eine verbesserte Haltevorrichtung zum Halten bzw. Befestigen einer Sensoreinrichtung, insbesondere einer optischen Sensoreinrichtung, beispielsweise eines Code-Readers, einer Kamera oder dergleichen, in einer gewünschten Position und Orientierung sowie eine Sensorvorrichtung mit einer solchen Haltevorrichtung bereitzustellen, die es erlaubt, an Befestigungsstangen mit unterschiedlichen Durchmessern sicher befestigt zu werden.

Gemäß einem ersten Aspekt der Erfindung wird die vorstehende Aufgabe durch eine Haltevorrichtung zum Befestigen eines Sensors an einer Befestigungsstange gelöst. Die Haltevorrichtung umfasst einen Trägerkörper zum Anbringen des Sensors, wobei der Trägerkörper eine Trägerplatte mit einer zentralen Bohrung aufweist, welche eine Innenseite der Trägerplatte ausbildet. Ferner umfasst die Haltevorrichtung ein Paar von Klemmbacken, wobei jede Klemmbacke eine Innenseite aufweist, welche ausgebildet ist, die Befestigungsstange in Eingriff zu nehmen, sowie einen vorderen Endabschnitt und einen hinteren Endabschnitt, wobei der vordere Endabschnitt jeweils einen Nutenabschnitt ausbildet, der in die zentrale Bohrung der Trägerplatte eingehängt ist bzw. eingehängt werden kann. Die Haltevorrichtung umfasst ferner eine Schraubverbindung, welche in Befestigungsbohrungen der hinteren Endabschnitte der Klemmbacken aufgenommen ist und ausgebildet ist, angezogen zu werden, um die hinteren Endabschnitte der Klemmbacken derart aufeinander zu zu bewegen, dass die Innenseiten der Klemmbacken gegen die Befestigungsstange gepresst werden, und um die vorderen Endabschnitte der Klemmbacken derart voneinander weg zu bewegen, dass die Innenseite bzw. die innere Kante der Trägerplatte abschnittsweise in den jeweiligen Nutenabschnitt eingreift.

Somit wird eine verbesserte Haltevorrichtung bereitgestellt zum Halten bzw. Befestigen einer Sensoreinrichtung, insbesondere einer optischen Sensoreinrichtung, beispielsweise eines Code-Readers, einer Kamera oder dergleichen, in einer gewünschten Position und Orientierung sowie eine Sensorvorrichtung mit einer solchen Haltevorrichtung bereitgestellt, die es erlaubt, an Befestigungsstangen mit unterschiedlichen Durchmessern sicher befestigt zu werden. Die erfindungsgemäße Haltevorrichtung stellt somit eine universell einsetzbare Halterung für Befestigungsstangen mit unterschiedlichen Durchmessern dar, die vorteilhaft eine Vielzahl von Haltevorrichtungen für Befestigungsstangen mit unterschiedlichen Durchmessern ersetzen kann.

Gemäß einer Ausführungsform ist die zentrale Bohrung der Trägerplatte im Wesentlichen kreisförmig. Vorteilhafterweise erlaubt diese Ausgestaltung der zentralen Bohrung der Trägerplatte eine Rotation der beiden Klemmbacken relativ zu dem Trägerkörper und somit relativ zu dem Sensor, der an dem Trägerkörper angebracht ist. Beispielsweise ist bei glänzenden Materialien in einer Fertigungsstraße die senkrechte Positionierung einer optischen Sensoreinrichtung, z.B. eines Codereaders, ungünstig, weil das Licht der internen Beleuchtung direkt in die Optik zurückgespiegelt wird und somit die Bildauswertung mittels der optischen Sensoreinrichtung stört.

In einer Ausführungsform bildet die radial nach innen gerichtete Innenseite der zentralen Bohrung der Trägerplatte eine Vielzahl von Aussparungen aus.

Gemäß einer Ausführungsform weist der jeweilige vordere Endabschnitt der Klemmbacken einen Passstift auf, welcher jeweils quer zu dem Nutenabschnitt angeordnet ist (d.h. dessen Längsachse quer zu einer Achse des Nutenabschnitts verläuft) und ausgebildet ist, in jeweils eine Aussparung der Vielzahl von Aussparungen der Innenseite der zentralen Bohrung der Trägerplatte einzugreifen. Hierzu kann der Durchmesser des Passstiftes im Wesentlichen dem Durchmesser der Aussparungen an der Innenseite der zentralen Bohrung der Trägerplatte entsprechen. Vorteilhafterweise werden durch die erfindungsgemäße Ausgestaltung der Nutenabschnitte der Klemmbacken und der Passstifte die Klemmbacken kraft- und formschlüssig mit der Trägerplatte verbunden, wodurch ein unbeabsichtigtes Verstellen der Orientierung der Haltevorrichtung und somit des Sensors relativ zu der Befestigungsstange vermieden werden kann.

In einer Ausführungsform sind die Aussparungen der Vielzahl von Aussparungen in Umfangsrichtung in gleichen Winkelabständen an der Innenseite der zentralen Bohrung ausgebildet. Beispielsweise können die Aussparungen an der Innenseite der zentralen Bohrung mit einem Winkelabstand von ungefähr 5, 10, 15, 20, 25, 30, 35, 40, 45, 60, oder 90 Grad ausgebildet sein. Alternativ hierzu können die Aussparungen der Vielzahl von Aussparungen in Umfangsrichtung auch in unterschiedlichen Winkelabständen an der Innenseite der zentralen Bohrung ausgebildet sein.

Vorteilhafterweise erlaubt die erfindungsgemäße Ausbildung der Vielzahl von Aussparrungen an der Innenseite der zentralen Bohrung vorgegebene Rotationen der beiden Klemmbacken relativ zu dem Trägerkörper in die durch die Aussparungen definierten Positionen und somit vorgegebene Anpassungen der Orientierung des Sensors relativ zu der Befestigungsachse. Mittels dieser vorgegebenen Rotation kann die Orientierung des Sensors mit einem vorgegebenen Winkel, beispielsweise 15 Grad verändert werden, wodurch keine aufwändige Feinjustierung der Sensororientierung erforderlich ist.

Gemäß einer Ausführungsform weist die Innenseite jeder Klemmbacke eine Aussparung auf, die ausgebildet ist, die Befestigungsstange in Eingriff zu nehmen.

In einer Ausführungsform umfasst die Aussparung der Innenseite jeder Klemmbacke im Profil zwei Randabschnitte, die in einem Winkel, beispielsweise in einem Winkel von ungefähr 45 Grad zu der Innenseite der Klemmbacke verlaufen, sowie einen im Wesentlichen halbkreisförmigen Mittelabschnitt.

Gemäß einer Ausführungsform ist der Radius des im Wesentlichen halbkreisförmigen Mittelabschnitts der Aussparung kleiner als der Radius der Befestigungsstange.

In einer Ausführungsform umfasst der Trägerkörper eine weitere Trägerplatte, die in einem Winkel, insbesondere einem rechten Winkel stoffschlüssig mit der Trägerplatte verbunden ist, wobei die weitere Trägerplatte zum Anbringen des Sensors ausgebildet ist. Insbesondere die Ausbildung des vorzugsweise aus einem wärmeleitfähigen Material bestehenden Trägerkörpers als Winkelelement mit der Trägerplatte und der weiteren Trägerplatte sorgen für eine gute Wärmeableitung der durch den Sensor erzeugten Wärme. Zur weiteren Verbesserung der Wärmeableitung kann ein weiterer Kühlkörper auf der Rückseite der weiteren Trägerplatte angebracht werden, an deren Vorderseite der Sensor befestigt ist.

Gemäß einem zweiten Aspekt der Erfindung wird ein Sensoreinrichtung mit einem Sensor, insbesondere einem optischen Sensor, wie einem Code-Reader, einer Kamera oder dergleichen, und einer Haltevorrichtung gemäß dem ersten Aspekt der Erfindung bereitgestellt.

Im Folgenden wird die Erfindung anhand von Ausführungsbeispielen und den Figuren näher beschrieben. In den Figuren zeigen:
- Fig. 1a: eine Explosionsdarstellung einer Haltevorrichtung gemäß einer Ausführungsform zum Befestigen eines Sensors an einer Befestigungsstange;
- Fig. 1b: eine Seitenansicht einer Klemmbacke der Haltevorrichtung und der Befestigungsstange von Figur 1a im Schnitt;
- Fig. 2: eine Seitenansicht einer Sensoreinrichtung gemäß einer Ausführungsform mit der Haltevorrichtung von Figur 1a und einem Sensor;
- Fig. 3a: eine Draufsicht der Sensoreinrichtung von Figur 2 mit einer Befestigungsstange mit einem ersten Durchmesser;
- Fig. 3b: einen Querschnitt der Sensoreinrichtung von Figur 3a entlang der Schnittebene A-A;
- Fig. 4a: eine Draufsicht der Sensoreinrichtung von Figur 2 mit einer Befestigungsstange mit einem zweiten größeren Durchmesser;
- Fig. 4b: einen Querschnitt der Sensoreinrichtung von Figur 4a entlang der Schnittebene A-A.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

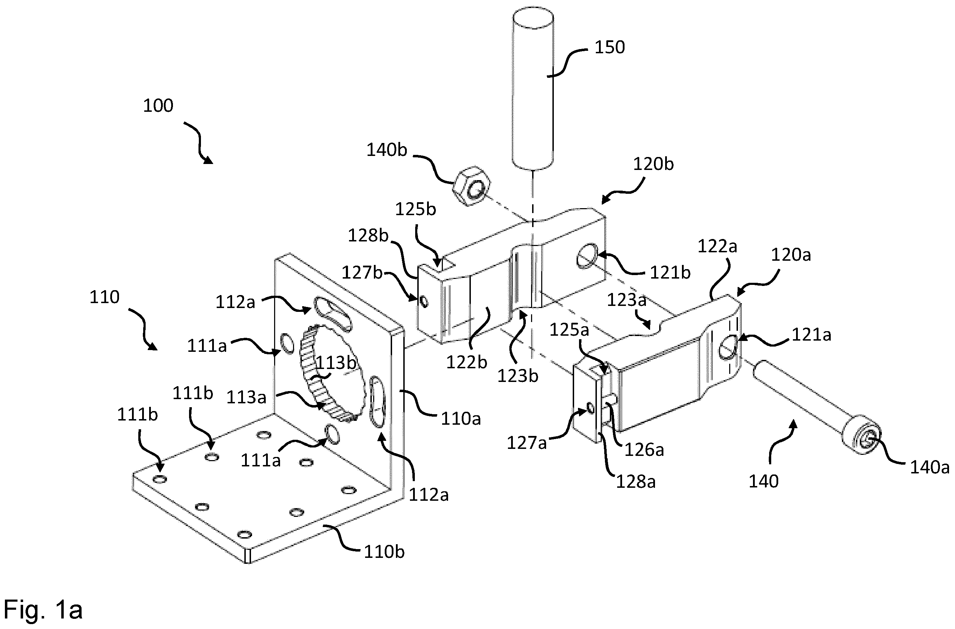

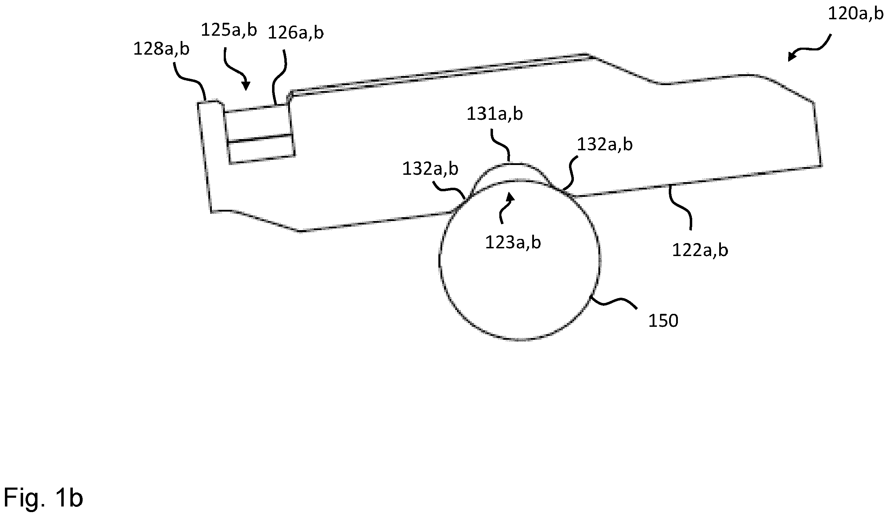

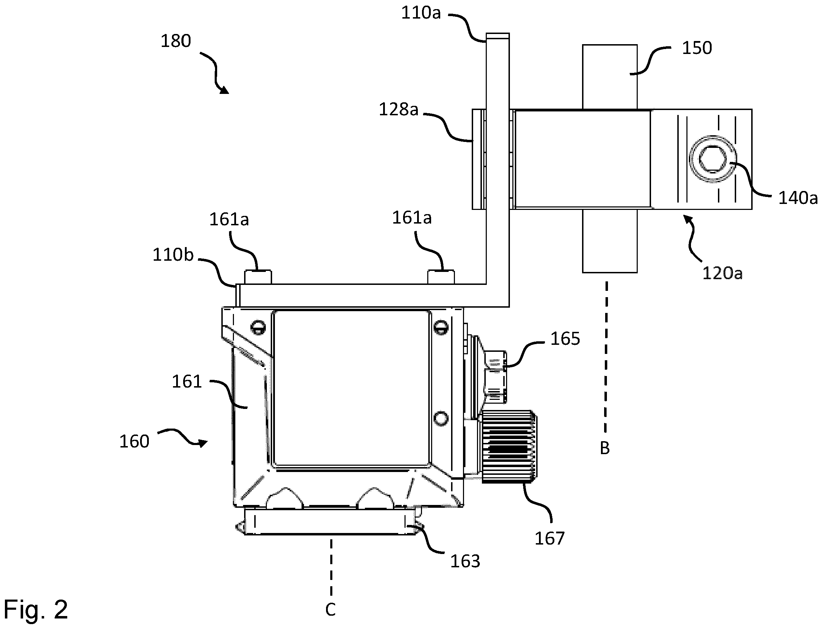

Figur 1a zeigt eine Explosionsdarstellung einer Haltevorrichtung 100 gemäß einer Ausführungsform zum Befestigen eines Sensors 160, der beispielsweise in Figur 2 in einer Sensoreinrichtung 180 dargestellt ist, an einer Befestigungsstange 150. Die Haltevorrichtung 100 und der Sensor 160 bilden zusammen eine Sensoreinrichtung 180, welche an der Befestigungsstange 150 derart befestigt werden kann, dass eine optische Achse C des Sensors 160 in einer gewünschten Orientierung zu der Längsachse B der Befestigungsstange 150 ausgerichtet ist. Wie in Figur 2 dargestellt, kann der Sensor 160 bekanntermaßen ein Sensorgehäuse 161, eine Sensoroptik 163, beispielsweise eine Linse 163, sowie Anschlussstutzen 165, 167 für eine Stromversorgung bzw. Datenauswertung des Sensors 160 umfassen. Weitere Ansichten (teilweise Schnittansichten) und Details der Haltevorrichtung 100 bzw. der Sensoreinrichtung 180 mit der Haltevorrichtung 100 und dem Sensor 160 sind in den Figuren 1b, 3a, 3b, 4a und 4b dargestellt.

Die Haltevorrichtung 100 umfasst einen Trägerkörper 110 zum Anbringen des Sensors 160, wobei der Trägerkörper 110 eine Trägerplatte 110a mit einer zentralen Bohrung 113a aufweist, welche vorzugsweise im Wesentlichen kreisförmig ist und eine Innenseite 113b bzw. Innenkante 113b der Trägerplatte 110a ausbildet. In einer Ausführungsform weist die radial nach innen gerichtete Innenseite 113a der zentralen Bohrung 113a der Trägerplatte 110a eine Vielzahl von Aussparungen auf, beispielweise eine Wellenfräsung mit einem jeweiligen Abstand der Aussparungen von 15 Grad entlang der gesamten Innenseite 113b der zentralen Bohrung 113a der Trägerplatte 110a.

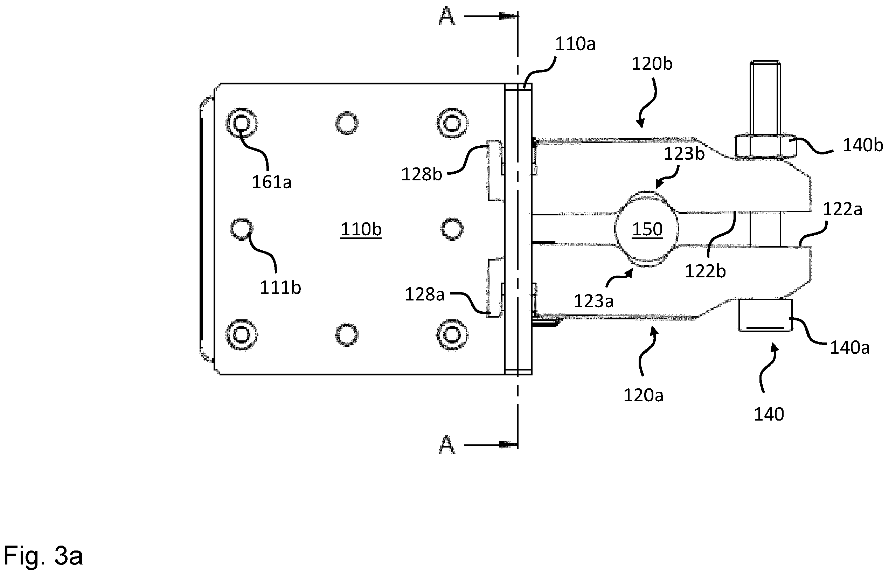

Der Trägerkörper 110 kann aus einem wärmeleitfähigen Material bestehen, beispielsweise Aluminium. Bei der in Figuren dargestellten Ausführungsform ist der Trägerkörper 110 als ein Winkelelement 110 ausgebildet, bei der der Trägerkörper 110 neben der Trägerplatte 110a eine weitere Trägerplatte 110b umfasst, die in einem rechten Winkel stoffschlüssig mit der Trägerplatte 110a verbunden ist. Dabei ist die weitere Trägerplatte 110b zum Anbringen des Sensors 160 ausgebildet. Hierzu können in der weiteren Trägerplatte 110b eine Vielzahl von Befestigungslöchern 111b vorgesehen sein, die ausgebildet sind, Befestigungsschrauben 161a aufzunehmen, um den Sensor 160 an der weiteren Trägerplatte 110b zu befestigen, wie dies beispielsweise in den Figuren 2 und 3a dargestellt ist.

Ferner umfasst die Haltevorrichtung 100 ein Paar von Klemmbacken 120a,b zum Befestigen der Haltevorrichtung 100 an der Befestigungsstange 150. Wie sich insbesondere den Figuren 1a und 1b entnehmen lässt, weist jede Klemmbacke 120a,b eine der Befestigungsstange 150 zugewandte Innenseite 122a,b auf, die eine zumindest teilweise ebene Oberfläche definiert. An jeder der Befestigungsstange 150 zugewandten Innenseite 122a,b, der Klemmbacken 120a,b ist eine Aussparung 123a,b ausgebildet, welche ausgebildet ist, die Befestigungsstange 150 zumindest teilweise aufzunehmen. Wie dies insbesondere der Figur 1b entnommen werden kann, in der eine Klemmbacke zur Veranschaulichung der zwei identisch ausgebildeten Klemmbacken 120a,b im Schnitt dargestellt ist, kann die jeweilige Aussparung 123a,b ein Profil aufweisen mit zwei zu den ebenen Abschnitten der Innenseite 122a,b im Wesentlichen schräg verlaufenden (beispielsweise in einem Winkel von ungefähr 45 Grad) Randabschnitten 132a,b sowie einem im Wesentlichen halbringförmigen Mittelabschnitt 131a,b. Wie dies insbesondere den Figuren 1b, 3a und 4a entnommen werden kann, stehen im befestigten Zustand insbesondere die Randabschnitte 132a,b mit der Oberfläche der Befestigungsstange 150 in Verbindung, wobei ein jeweiliger Teil der Befestigungsstange 150 in den durch den halbringförmigen Mittelabschnitt 131a,b definierten Teil des Aussparung 123a,b hineinragt. In einer Ausführungsform ist der Radius des im Wesentlichen halbringförmigen Mittelabschnitts 131a,b kleiner als der Radius der Befestigungsstange 150.

Jede Klemmbacke 120a,b umfasst einen vorderen der Trägerplatte 110a zugewandten Endabschnitt 127a,b und einen hinteren von der Trägerplatte 110a abgewandten Endabschnitt. Wie dies insbesondere den Figuren 1a und 1b entnommen werden kann, umfasst jeder vordere Endabschnitt 127a,b der Klemmbacken 120a,b einen Nutenabschnitt 125a,b mit einem jeweiligen Kragenabschnitt 128a,b, der eine Seitenwand des Nutenabschnitts 125a,b definiert. Die vorderen Endabschnitte 127a,b der beiden Klemmbacken 120a,b sind jeweils derart in die zentrale Bohrung 113a der Trägerplatte 110a eingehängt bzw. eingebracht, dass die Innenseite 113b der zentralen Bohrung 113a der Trägerplatte 110a in den Nutenabschnitt 125a,b der beiden Klemmbacken 120a,b eingreift.

Die Haltevorrichtung 100 umfasst ferner eine Schraubverbindung 140, welche in Befestigungsbohrungen 121a,b der hinteren Endabschnitte der Klemmbacken 120a,b aufgenommen ist und eine Schraube 140a und eine Schraubenmutter 140b umfassen kann. Durch ein Anziehen der Schraubverbindung 140 werden die hinteren Endabschnitte der Klemmbacken 120a, b derart aufeinander zu bewegt, dass die Innenseiten 122a der Klemmbacken 120a,b, insbesondere im Wesentlichen die Randabschnitte 132a,b der Aussparungen 123a,b gegen die zwischen den Klemmbacken angeordnete Befestigungsstange 150 gepresst werden. Gleichzeitig werden durch das Anziehen der Schraubverbindung 140 die vorderen Endabschnitte 127a,b der Klemmbacken 120a,b derart voneinander weg bewegt, dass die Innenseite 113b der Trägerplatte 110a abschnittsweise in den jeweiligen Nutenabschnitt 125a,b der Klemmbacken 120a,b eingreift.

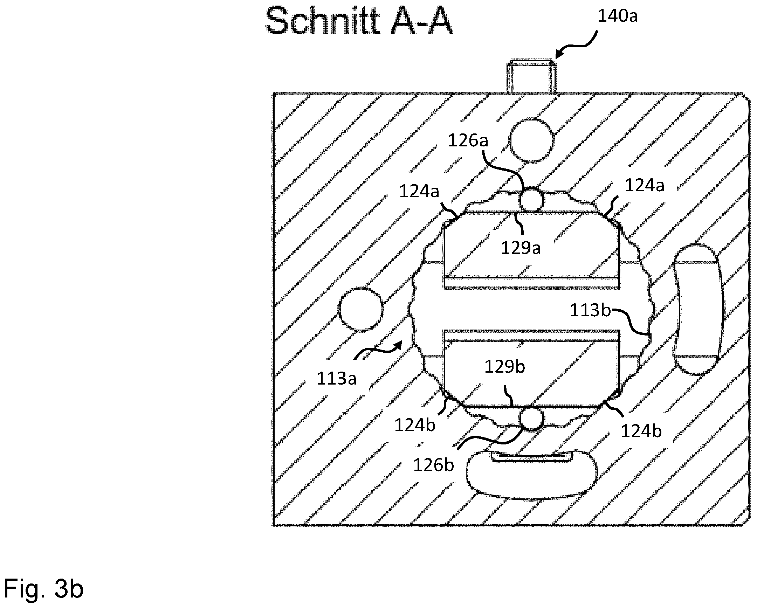

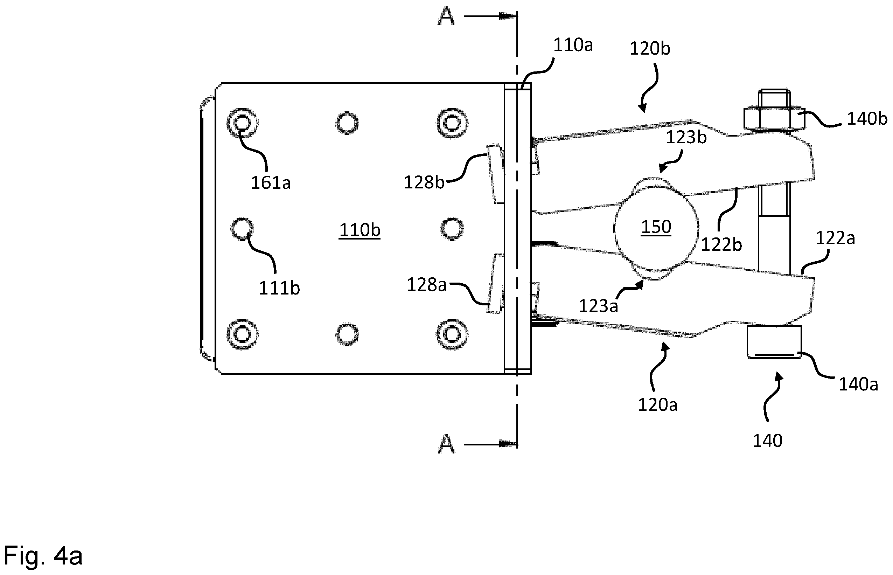

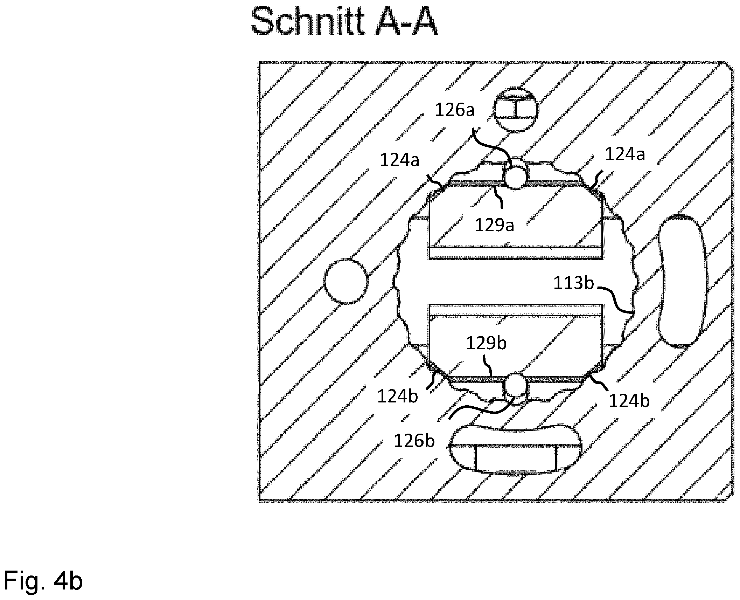

Wie insbesondere den Figuren 1a und 1b entnommen werden kann, weist der jeweilige vordere Endabschnitt 127a,b der Klemmbacken 120,b einen Passstift 126a,b auf, welcher jeweils quer zu dem Nutenabschnitt 125a,b angeordnet ist (d.h. dessen Längsachse quer zu einer Achse des Nutenabschnitts 125a,b verläuft) und ausgebildet ist, in jeweils eine Aussparung der Vielzahl von Aussparungen der Innenseite 113b der zentralen Bohrung 113a der Trägerplatte 110a einzugreifen. Hierzu entspricht der Durchmesser des Passstiftes 126a,b im Wesentlichen dem Durchmesser der Aussparungen an der Innenseite 113b der zentralen Bohrung 113a der Trägerplatte 110a. Das Eingreifen der Passstifte 126a,b in eine jeweilige Aussparung der Vielzahl von Aussparungen der Innenseite 113b der zentralen Bohrung 113a der Trägerplatte 110a ist in Figur 3b für eine Befestigungsstange 150 mit einem kleineren Durchmesser und in Figur 4b für eine Befestigungsstange mit einem größeren Durchmesser dargestellt. Wie ferner in den Figuren 3b und 4b gekennzeichnet, kann der jeweilige Nutenabschnitt 125a,b der Klemmbacken 120a,b einen geraden Mittelbereich 129a,b sowie schräg verlaufende (beispielsweise in einem Winkel von 45 Grad) Randbereiche 124a,b aufweisen. Wie in den Figuren 3b und 4b ersichtlich, dienen insbesondere der Passstift 126a,b und die Randbereiche 124a,b der Nutenabschnitte 125a,b für eine kraft- und formschlüssige Verbindung zwischen den Klemmbacken 120a,b und der Trägerplatte 110a.

Wie insbesondere den Figuren 1a und 1b entnommen werden kann, kann die Trägerplatte 110a ferner ein erstes Paar aus horizontal gegenüberliegend angeordneten Befestigungslöchern 111a der Trägerplatte 110a und Langlöchern 112a der Trägerplatte 110a aufweisen. Ferner kann die Trägerplatte 110a ein zweites Paar aus vertikal gegenüberliegend angeordneten Befestigungslöchern 111a der Trägerplatte 110a und Langlöchern 112a der Trägerplatte 110a aufweisen.

## Patentansprüche

1. Haltevorrichtung (100) zum Befestigen eines Sensors (160) an einer Befestigungsstange (150), wobei die Haltevorrichtung (100) umfasst:
einen Trägerkörper (110) zum Anbringen des Sensors (160), wobei der Trägerkörper (110) eine Trägerplatte (110a) mit einer zentralen Bohrung (113a) aufweist, welche eine Innenseite (113b) der Trägerplatte (110a) ausbildet;
einem Paar von Klemmbacken (120a,b), wobei jede Klemmbacke (120a,b) eine Innenseite (122a,b) aufweist, welche ausgebildet ist, die Befestigungsstange (150) in Eingriff zu nehmen, sowie einen vorderen Endabschnitt (127a,b) und einen hinteren Endabschnitt, wobei der vordere Endabschnitt (127a,b) jeweils einen Nutenabschnitt (125a,b) ausbildet, der in die zentrale Bohrung (113a) der Trägerplatte (110a) eingehängt ist; und
eine Schraubverbindung (140), welche in Befestigungsbohrungen (121a,b) der hinteren Endabschnitte der Klemmbacken (120a,b) aufgenommen ist und ausgebildet ist, angezogen zu werden, um die hinteren Endabschnitte der Klemmbacken (120a,b) derart aufeinander zu zu bewegen, dass die Innenseiten (122a,b) der Klemmbacken (120a,b) gegen die Befestigungsstange (150) gepresst werden, und um die vorderen Endabschnitte (127a,b) der Klemmbacken (120a,b) derart voneinander weg zu bewegen, dass die Innenseite (113b) der Trägerplatte (110a) abschnittsweise in den jeweiligen Nutenabschnitt (125a,b) eingreift.

2. Haltevorrichtung (100) nach Anspruch 1, wobei die zentrale Bohrung (113a) der Trägerplatte (110a) kreisförmig ist.

3. Haltevorrichtung (100) nach Anspruch 2, wobei die Innenseite (113b) der zentralen Bohrung (113a) der Trägerplatte (110a) eine Vielzahl von Aussparungen ausbildet.

4. Haltevorrichtung (100) nach Anspruch 3, wobei der jeweilige vordere Endabschnitt (127a,b) der Klemmbacken (120a,b) einen Passstift (126a,b) aufweist, welcher jeweils quer zu dem Nutenabschnitt (125a,b) angeordnet ist und ausgebildet ist, in jeweils eine Aussparung der Vielzahl von Aussparungen der Innenseite (113b) der zentralen Bohrung (113a) der Trägerplatte (110a) einzugreifen.

5. Haltevorrichtung (100) nach Anspruch 3 oder 4, wobei die Vielzahl von Aussparungen in Umfangsrichtung in gleichen oder unterschiedlichen Winkelabständen an der Innenseite (113b) der zentralen Bohrung (113a) ausgebildet sind.

6. Haltevorrichtung (100) nach einem der vorstehenden Ansprüche, wobei die Innenseite (122a,b) jeder Klemmbacke (120a,b) eine Aussparung (123a,b) aufweist, die ausgebildet ist, die Befestigungsstange (150) in Eingriff zu nehmen.

7. Haltevorrichtung (100) nach Anspruch 6, wobei die Aussparung (123a,b) jeder Klemmbacke (120a,b) im Profil zwei Randabschnitte (132a,b) umfasst, die in einem Winkel zu der Innenseite (122a,b) der Klemmbacke (120a,b) verlaufen, sowie einen im Wesentlichen halbkreisförmigen Mittelabschnitt (131a,b).

8. Haltevorrichtung (100) nach Anspruch 7, wobei der Radius des im Wesentlichen halbkreisförmigen Mittelabschnitts (131a,b) kleiner als der Radius der Befestigungsstange (150) ist.

9. Haltevorrichtung (100) nach einem der vorstehenden Ansprüche, wobei der Trägerkörper (110) eine weitere Trägerplatte (110b) umfasst, die in einem Winkel, insbesondere einem rechten Winkel stoffschlüssig mit der Trägerplatte (110a) verbunden ist, wobei die weitere Trägerplatte (110b) zum Anbringen des Sensors (160) ausgebildet ist.

10. Sensoreinrichtung (180), insbesondere eine optische Sensoreinrichtung (180) mit einem Sensor (160) und einer Haltevorrichtung (100) gemäß einem der vorstehenden Ansprüche zum Befestigen der Sensoreinrichtung (180) an einer Befestigungsstange (150).
